# EUROPEAN PATENT APPLICATION

(11) **EP 4 671 005 A1**
(43) Date of publication of application: **31.12.2025**
(21) Application number: 24759612.5
(22) Date of filing: 18.02.2024
(51) Int. Cl.: B60H 1/00

(54) **AIR-CONDITIONING MODULE**

(30) Priority: 20.02.2023 CN 202320267415 U
(71) Applicant: Valeo Systemes Thermiques, 78320 Le Mesnil Saint Denis (FR)
(72) Inventor: LIN, Qinghua, Jingzhou, Hubei 434000 (CN)
(74) Representative: Valeo Powertrain Systems
(86) International application number: PCT/CN2024/077365
(87) International publication number: WO 2024/174935

(57) **Abstract**

An air-conditioning module, comprising: a housing (1), and a first damper (2) and a second damper (3), which are arranged in the housing (1), wherein the first damper (2) and the second damper (3) are arranged sharing an axis of rotation (X-X); the housing (1) has a first support portion (11) and a second support portion (12); the first support portion (11) is used for supporting the first damper (2) to rotate around the axis of rotation (X-X); and the second support portion (12) is used for supporting the second damper (3) to rotate around the axis of rotation (X-X). By means of the device, the precision of movement of the first damper and the second damper is improved.

## Description

### Technical Field

The present invention relates to an air-conditioning module, in particular to an air-conditioning module used in an air-conditioning system of an automobile.

### Background Art

An air-conditioning module in the prior art comprises a housing and a plurality of dampers, wherein the plurality of dampers are arranged inside the housing and used for controlling the flow of air in the housing. The housing has an air flow inlet for allowing air to flow in and an air flow outlet for allowing air to flow out.

The air-conditioning module in the prior art comprises at least two coaxially arranged dampers. Such an air-conditioning module has the disadvantage of low movement accuracy of the dampers.

### Summary of the Invention

An objective of the present invention is to provide an air-conditioning module, which has the advantage of high movement accuracy of the air door.

An air-conditioning module for achieving the objective comprises a housing and a first damper and a second damper, which are arranged in the housing, wherein the first damper and the second damper are arranged sharing an axis of rotation; the housing has an air flow inlet and an air flow outlet;
the housing has a first support portion and a second support portion; the first support portion is used for supporting the first damper to rotate around the axis of rotation; and the second support portion is used for supporting the second damper to rotate around the axis of rotation.

In a specific embodiment, the first damper is sleeved on the outside of the second damper, and there is a radial gap between the first damper and the second damper.

In a specific embodiment, the first damper is sleeved on the outside of the second damper, and there is a radial gap between the first damper and the second damper.

In a specific embodiment, along a direction in which the axis of rotation is located, the housing has at least two first support portions and at least two second support portions.

In a specific embodiment, the first damper has a through hole; the second damper comprises a main body portion and a shaft portion; the shaft portion is inserted into the through hole; and an inner peripheral wall of the through hole and an outer peripheral wall of the shaft portion define the gap.

In a specific embodiment, along the direction in which the axis of rotation is located, there are at least two through holes; and the shaft portion passes through the at least two through holes.

In a specific embodiment, the first damper has at least one anti-misalignment tooth protruding along the direction in which the axis of rotation is located; and
along the direction in which the axis of rotation is located, the housing further has a first axial end face and a second axial end face, wherein the first axial end face and the second axial end face are staggered, so as to enable a free end of the anti-misalignment tooth to be located between the first axial end face and the second axial end face.

In a specific embodiment, the air-conditioning module further comprises a first driving assembly and a second driving assembly; the first driving assembly is used for driving the first damper to rotate around the axis of rotation, and the second driving assembly is used for driving the second damper to rotate around the axis of rotation.

In a specific embodiment, the first driving assembly comprises a drive rod; the first damper further has a drive tooth and a tooth end face; along the direction in which the axis of rotation is located, the anti-misalignment tooth protrudes from the tooth end face; and
the drive rod is engaged with the drive tooth.

In a specific embodiment, the drive rod has a drive tooth slot and an anti-misalignment tooth slot; the drive tooth slot is engaged with the drive tooth; and the anti-misalignment tooth slot allows the anti-misalignment tooth to pass through.

In a specific embodiment, the anti-misalignment tooth is aligned with the drive tooth; and the drive tooth slot is aligned with the anti-misalignment tooth slot.

The present invention has the following positive and progressive effect: Since the first damper is supported by the first support portion of the housing to rotate, and the second damper is supported by the second support portion of the housing 1 to rotate, the first damper and the second damper do not need to have a mutually rotatable support relationship, such that the movement of the first damper and the movement of the second damper will not interfere with each other, thereby improving the movement accuracy of the first damper and the second damper. In addition, such a design can also avoid the noise generated by the first damper and the second damper due to the rotation interference.

### Brief Description of the Drawings

The above and other features, properties and advantages of the present invention will become more apparent through the following description with reference to the accompanying drawings and embodiments, wherein:
Fig. 1 is a schematic view of an air-conditioning module;
Fig. 2 is a side view of the air-conditioning module;
Fig. 3 is a schematic view of the air-conditioning module cut along direction A-A;
Fig. 4 is an enlarged view of part B in Fig. 3;
Fig. 5 is a schematic view of the air-conditioning module in Fig. 4;
Fig. 6 is a schematic view of a housing in Fig. 4;
Fig. 7 is a schematic view of an air-conditioning module, in which a first damper and a second damper are shown;
Fig. 8 is a schematic view of a housing in Fig. 7;
Fig. 9 is an enlarged view of part C in Fig. 8;
Fig. 10A is a schematic view of the first damper and the second damper;
Fig. 10B is a schematic view of the first damper and the second damper after being decomposed along a direction in which an axis of rotation is located;
Fig. 11 is a partial schematic view of the air-conditioning module, in which anti-misalignment teeth are shown; and
Fig. 12 is a schematic view of a drive rod.

### Detailed Description of the Embodiments

Various different implementations or embodiments of the technical solution of the subject matter implemented will be disclosed below. To simplify the disclosed content, specific examples of various elements and arrangements are described below. Of course, these are only examples and are not intended to limit the scope of the present invention. For example, the distribution of a first feature at a second feature as disclosed below may include an implementation in which the first and second features are distributed by direct connection, but may also include an implementation in which an additional feature is formed between the first and second features, so that there may be no direct connection between the first and second features. In addition, in this content, reference signs and/or letters might by repeated in different examples. This repetition is aimed at brevity and clarity, and does not in itself indicate a relationship between the implementations and/or structures to be discussed. Furthermore, when a first element is described as being connected or joined to a second element, this description includes an implementation in which the first and second elements are directly connected or joined together, and also includes the addition of one or more other intervening elements so that the first and second elements are indirectly connected or joined together.

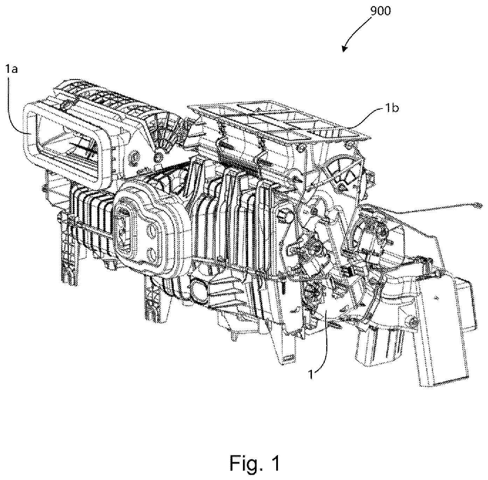

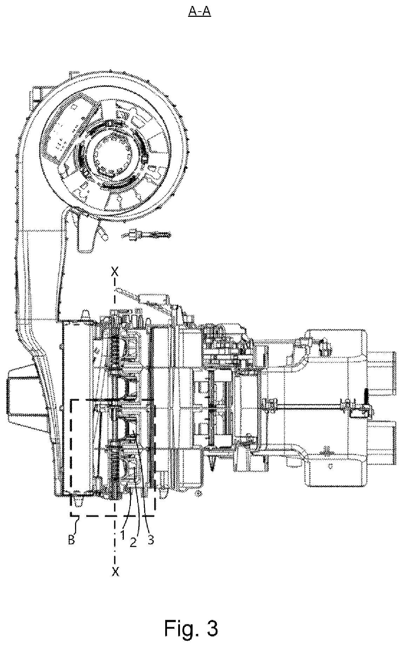

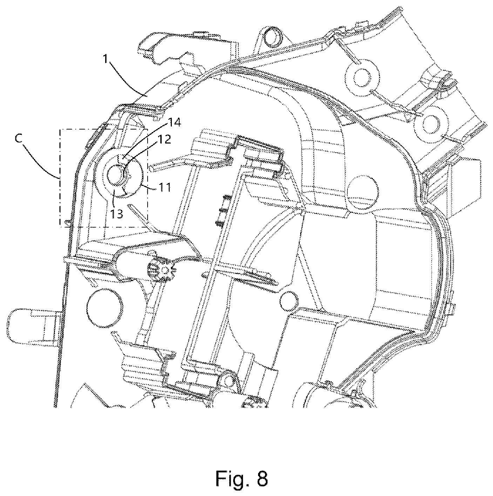

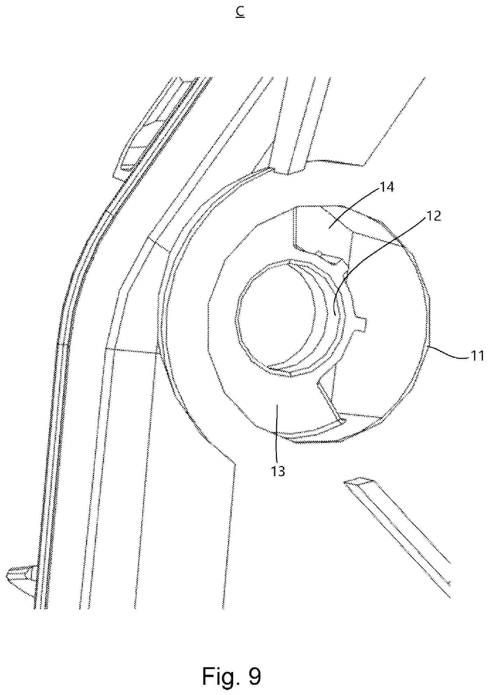

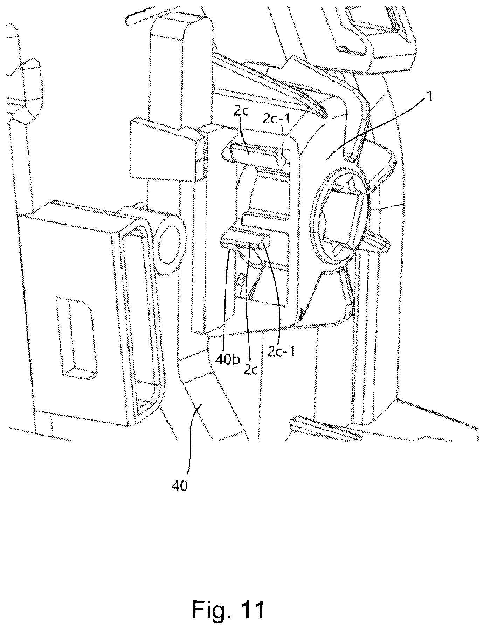

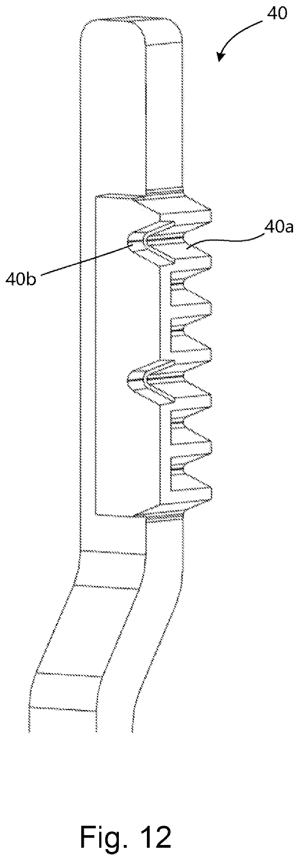

It must be noted that Figs. 1 to 12 are all merely examples and are not drawn to scale, and should not be regarded as limiting the scope of protection actually claimed for the present invention.

Figs. 1, 2, 3, 4 and 5 show an air-conditioning module 900 in an embodiment of the present invention, comprising a housing 1 and a first damper 2 and a second damper 3, which are arranged in the housing 1, wherein the first damper 2 and the second damper 3 are arranged sharing an axis of rotation X-X; and the housing 1 has an air flow inlet 1a and an air flow outlet 1b. Air can enter the housing 1 from the air flow inlet 1a and flow out of the housing 1 from the air flow outlet 1b. The first damper 2 and the second damper 3 are used for controlling the air flow inside the housing 1.

In order to improve the movement accuracy of the damper, the housing 1 is configured to have a first support portion 11 and a second support portion 12; the first support portion 11 is used for supporting the first damper 2 to rotate around the axis of rotation X-X; and the second support portion 12 is used for supporting the second damper 3 to rotate around the axis of rotation X-X. The first support portion 11 and the second support portion 12 may be in the form of bearings to rotatably support the first damper 2 and the second damper 3.

Since the first damper 2 is supported by the first support portion 11 of the housing 1 to rotate, and the second damper 3 is supported by the second support portion 12 of the housing 1 to rotate, the first damper 2 and the second damper 3 do not need to have a mutually rotatable support relationship, such that the movement of the first damper 2 and the movement of the second damper 3 will not interfere with each other, thereby improving the movement accuracy of the first damper 2 and the second damper 3. In addition, such a design can also avoid the noise generated by the first damper 2 and the second damper 3 due to the rotation interference.

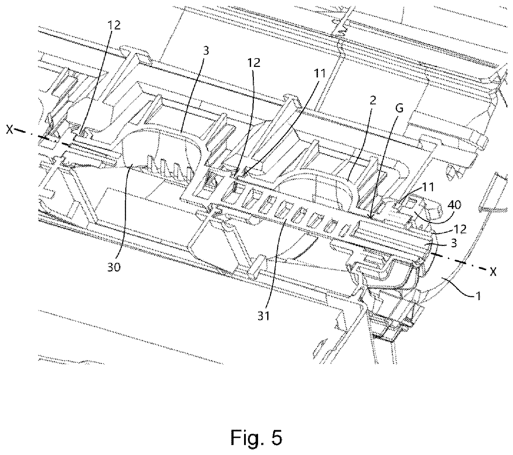

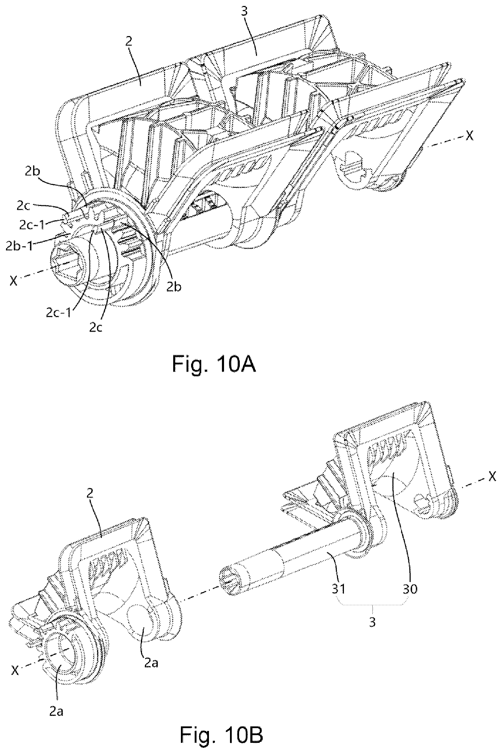

As shown in Figs. 5, 10A and 10B, the first damper 2 is sleeved on the outside of the second damper 3, and there is a radial gap G between the first damper 2 and the second damper 3. The gap G allows the first damper 2 and the second damper 3 to not cause rotation interference. The first damper 2 is sleeved on the outside of the second damper 3, which also makes the structure of the air-conditioning module 900 compact. The radial direction refers to a direction perpendicular to the axis of rotation X-X.

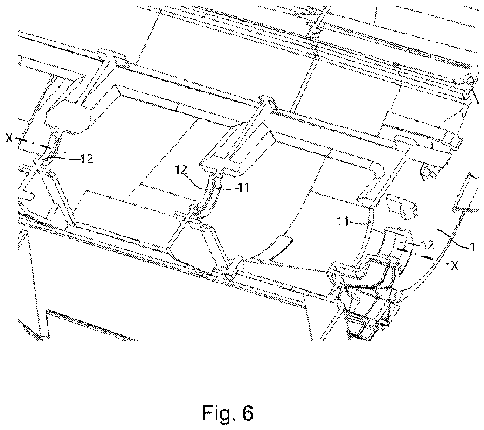

As shown in Figs. 5 and 6, along a direction in which the axis of rotation X-X is located, the housing 1 has at least two first support portions 11 which are staggered and at least two second support portions 12 which are staggered. Such a design enables both the first damper 2 and the second damper 3 to be stably supported, thereby improving the movement accuracy of the dampers.

With continued reference to Fig. 10B, the first damper 2 has a through hole 2a; the second damper 3 comprises a main body portion 30 and a shaft portion 31; the shaft portion 31 is inserted into the through hole 2a; and the inner peripheral wall of the through hole 2a and the outer peripheral wall of the shaft portion 31 define the gap G. More specifically, there are at least two through holes 2a; and the shaft portion 31 passes through the at least two through holes 2a. A center line of the through hole 2a coincides with the axis of rotation X-X, and a center line of the shaft portion 31 coincides with the axis of rotation X-X. Such a design makes the structure of the air-conditioning module 900 compact.

As shown in Fig. 5, along the direction in which the axis of rotation X-X is located, the first support portion 11 and the second support portion 12 are staggered. Such a design helps to reduce the radial dimensions of the first damper 2 and the second damper 3, thereby making the structure of the air-conditioning module 900 compact.

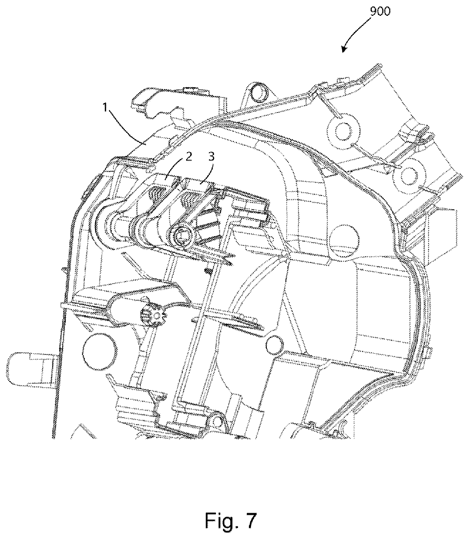

As shown in Figs. 7, 8, 9, 10A, 10B and 11, the first damper 2 has at least one anti-misalignment tooth 2c protruding along the direction in which the axis of rotation X-X is located; along the direction in which the axis of rotation X-X is located, the housing 1 further has a first axial end face 13 and a second axial end face 14, wherein the first axial end face 13 and the second axial end face 14 are staggered, so as to enable a free end 2c-1 of the anti-misalignment tooth 2c to be located between the first axial end face 13 and the second axial end face 14. The anti-misalignment tooth 2c is able to prevent the first damper 2 from being installed in the wrong position. When in the wrong position, the free end 2c-1 of the anti-misalignment tooth 2c will conflict with the first axial end face 13, causing the first damper 2 to fail to be installed successfully. The free end 2c-1 may be an end face of the anti-misalignment tooth 2c.

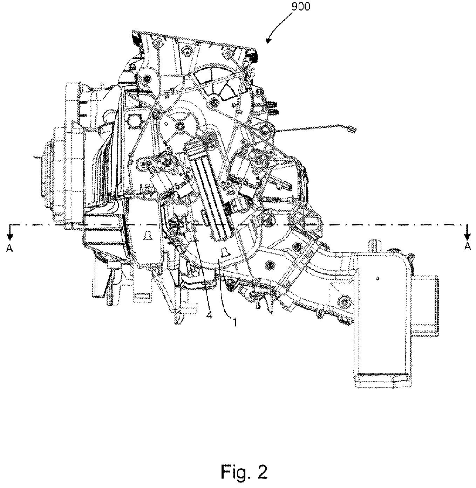

With reference to Fig. 2, the air-conditioning module 900 further comprises a first driving assembly 4 and a second driving assembly (not shown in the figure); and the first driving assembly 4 is used for driving the first damper 2 to rotate around the axis of rotation X-X, and the second driving assembly is used for driving the second damper 3 to rotate around the axis of rotation X-X. Both the first driving assembly 4 and the second driving assembly may be motor assemblies. Specifically, the second driving assembly is configured to drive the shaft portion 31 to rotate.

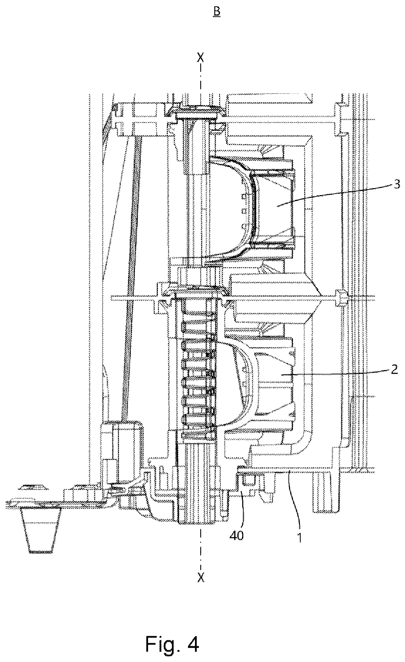

As shown in Figs. 4, 5, 11 and 12, the first driving assembly 4 comprises a drive rod 40; the first damper 2 further has a drive tooth 2b and a tooth end face 2b-1; along the direction in which the axis of rotation X-X is located, the anti-misalignment tooth 2c protrudes from the tooth end face 2b-1; and the drive rod 40 is engaged with the drive tooth 2b.

In a specific embodiment, the drive rod 40 has a drive tooth slot 40a and an anti-misalignment tooth slot 40b; the drive tooth slot 40a is engaged with the drive tooth 2b; and the anti-misalignment tooth slot 40b allows the anti-misalignment tooth 2c to pass through. Such a design allows the drive rod 40 to be positioned by the anti-misalignment tooth 2c.

In a specific embodiment, the anti-misalignment tooth 2c is aligned with the drive tooth 2b; and the drive tooth slot 40a is aligned with the anti-misalignment tooth slot 40b.

Although the present invention has been disclosed above with reference to preferred embodiments, they are not intended to limit the present invention. Any person skilled in the art would have made possible changes and amendments without departing from the spirit and scope of the present invention, and any amendments, equivalent changes and modifications made to the above embodiments according to the technical essence of the present invention, without departing from the technical solutions of the present invention, all fall within the scope of protection defined by the claims of the present invention.

## Claims

1. An air-conditioning module, comprising a housing (1), and a first damper (2) and a second damper (3), which are arranged in the housing (1), wherein the first damper (2) and the second damper (3) are arranged sharing an axis of rotation (X-X);
**characterized in that** the housing (1) has a first support portion (11) and a second support portion (12); the first support portion (11) is used for supporting the first damper (2) to rotate around the axis of rotation (X-X); and the second support portion (12) is used for supporting the second damper (3) to rotate around the axis of rotation (X-X).

2. The air-conditioning module as claimed in claim 1, **characterized in that** the first damper (2) is sleeved on the outside of the second damper (3), and there is a radial gap (G) between the first damper (2) and the second damper (3).

3. The air-conditioning module as claimed in claim 1, **characterized in that**, along a direction in which the axis of rotation (X-X) is located, the housing (1) has at least two first support portions (11) which are staggered and at least two second support portions (12) which are staggered.

4. The air-conditioning module as claimed in claim 2, **characterized in that** the first damper (2) has a through hole (2a); the second damper (3) comprises a main body portion (30) and a shaft portion (31); the shaft portion (31) is inserted into the through hole (2a); and an inner peripheral wall of the through hole (2a) and an outer peripheral wall of the shaft portion (31) define the gap (G).

5. The air-conditioning module as claimed in claim 1, **characterized in that**, along a direction in which the axis of rotation (X-X) is located, the first supporting portion (11) and the second supporting portion (12) are staggered.

6. The air-conditioning module as claimed in claim 1, **characterized in that** the first damper (2) has at least one anti-misalignment tooth (2c) protruding along a direction in which the axis of rotation (X-X) is located; and
along the direction in which the axis of rotation (X-X) is located, the housing (1) further has a first axial end face (13) and a second axial end face (14), wherein the first axial end face (13) and the second axial end face (14) are staggered, so as to enable a free end (2c-1) of the anti-misalignment tooth (2c) to be located between the first axial end face (13) and the second axial end face (14).

7. The air-conditioning module as claimed in claim 1, **characterized in that** the air-conditioning module (900) further comprises a first driving assembly (4) and a second driving assembly; the first driving assembly (4) is used for driving the first damper (2) to rotate around the axis of rotation (X-X), and the second driving assembly is used for driving the second damper (3) to rotate around the axis of rotation (X-X).

8. The air-conditioning module as claimed in claim 7, **characterized in that** the first driving assembly (4) comprises a drive rod (40); the first damper (2) further has a drive tooth (2b) and a tooth end face (2b-1); along the direction in which the axis of rotation (X-X) is located, the anti-misalignment tooth (2c) protrudes from the tooth end face (2b-1); and the drive rod (40) is engaged with the drive tooth (2b).

9. The air-conditioning module as claimed in claim 8, **characterized in that** the drive rod (40) has a drive tooth slot (40a) and an anti-misalignment tooth slot (40b); the drive tooth slot (40a) is engaged with the drive tooth (2b); and the anti-misalignment tooth slot (40b) allows the anti-misalignment tooth (2c) to pass through.

10. The air-conditioning module as claimed in claim 9, **characterized in that** the anti-misalignment tooth (2c) is aligned with the drive tooth (2b); and the drive tooth slot (40a) is aligned with the anti-misalignment tooth slot (40b).
